# EUROPEAN PATENT APPLICATION

(11) **EP 4 641 143 A1**
(43) Date of publication of application: **29.10.2025**
(21) Application number: 25171779.9
(22) Date of filing: 22.04.2025
(51) Int. Cl.: G01F 1/66, G01F 15/14

(54) **MEASUREMENT INSERT**

(30) Priority: 26.04.2024 DE 102024111879
(71) Applicant: Landis+Gyr GmbH, 90459 Nürnberg (DE)
(72) Inventor: WAGNER, Christian, 90459 Nürnberg (DE); OLBERS, Andreas, 90459 Nürnberg (DE)
(74) Representative: Marks & Clerk LLP

(57) **Abstract**

A measurement insert for a utility meter, the measurement insert comprising a central portion defining a measuring path of the utility meter, at least two supports connected to either side of the central portion and a reflector arrangement. The reflector arrangement comprises at least two reflectors configured to reflect one or more signals in the measuring path, each of the at least two reflectors being connected to a respective support of the at least two supports, and an elongate portion at least partially connected to the central portion, wherein the elongate portion is configured to connect the at least two reflectors to each other.

## Description

### FIELD

The present disclosure relates to a measurement insert, a utility meter and a method of forming the measurement insert.

### BACKGROUND

A utility meter, such as a thermal energy meter, may be used to measure a quantity of thermal energy that is supplied to a consumer. The meter may be configured to measure the thermal energy based on a temperature and a rate of a fluid flowing through the meter. The meter is configured to measure the rate of the fluid flowing through the meter based on the propagation of one or more ultrasonic signals in the meter. The meter may include a flow tube and a measurement insert that can be inserted in the flow tube. The measurement insert may comprise two or more reflectors arranged to guide the ultrasonic signals in the meter. In known meters, the reflectors may be clipped onto the measurement insert by hand. When the reflectors are clipped onto the measurement insert by hand, there may be a risk that one or more of the reflectors may be incorrectly orientated on the measurement insert and/or lost.

In use, the fluid flowing through the utility meters may cause the reflectors to vibrate and/or move relative to the measurement insert, which may affect an accuracy of the fluid flow rate determined by the meter.

It is therefore an aim of at least one embodiment of at least one aspect of the present disclosure to obviate or at least mitigate at least one of the above identified shortcomings of the prior art.

### SUMMARY

According to a first aspect of the present disclosure there is provided a measurement insert for a utility meter, the measurement insert comprising a central portion defining a measuring path of the utility meter, at least two supports connected to and/or arranged on either side of the central portion,
at least two connection portions, each of the at least two connection portions being configured to connect a respective support of the at least two supports to the central portion, and a reflector arrangement. The reflector arrangement comprises at least two reflectors configured to reflect one or more signals in the measuring path, each of the at least two reflectors being connected to a respective support of the at least two supports, and an elongate portion at least partially connected to the central portion and to each of the at least two connection portions, wherein the elongate portion is configured to connect the at least two reflectors to each other.

By configuring the elongate portion to connect the at least two reflectors to each other, an installation of the at least two reflectors in the measurement insert may be facilitated. For example, the elongate portion may determine or define a position of the at least two reflectors relative to each other. This may allow for a reduction of a tolerance for installing the at least two reflectors with respect to each other in the measurement insert. This in turn may allow the utility meter to determine a rate of fluid flowing through the meter and/or a quantity of thermal energy that is supplied to the consumer with an improved accuracy. Additionally or alternatively, by connecting the at least two reflectors to each other using the elongate portion, the at least two reflectors may be correctly orientated relative to each other and/or relative to one or more transducers of the utility meter.

By connecting the elongate portion partially to the central portion and to each of the at least two connection portions, movement, rattling and/or slipping of the at least two reflectors, e.g. due to fluid flowing through the utility meter, may be reduced or prevented. This in turn may result in an improved stability of the measurement insert and/or improved accuracy of the utility meter. Additionally or alternatively, a loss of at least one or each of the at least two reflectors may be prevented.

By partially connecting the elongate portion to the at least two connection portions, a stability of a connection between the central portion and the at least two supports may be increased and/or a flexion or deformation of the at least two supports relative to the central portion may be reduced or prevented. This may increase a stability of the measurement insert, which in turn may allow the utility meter to determine a rate of fluid flowing through the meter and/or a quantity of thermal energy that is supplied to the consumer with an improved accuracy.

The utility meter may comprise a thermal energy meter, such as a heat meter or a cooling meter. Alternatively, the utility meter may comprise a flow rate meter, such as a water meter or a gas meter.

The elongate portion and the at least two reflectors may be integrally formed with each other. This may facilitate manufacture of the reflector arrangement.

Each of the at least two reflectors may be connected to the respective support of the at least two supports such that the respective support surrounds the reflector. Each of the at least two supports may be moulded around the respective reflector of the at least two reflectors. By connecting each of the at least two reflectors to the respective support of the at least two supports such that the respective support surrounds the reflector and/or by moulding each of the at least two supports around the respective reflector of the at least two reflectors, a firm and/or stable connection between each reflector and the respective support may be provided. This may avoid unwanted loss of the at least two reflectors. This in turn may ensure that the measurement insert may be used in the utility meter to determine the rate of fluid flowing through the meter and/or the quantity of thermal energy that is supplied to the consumer. Additionally or alternatively, by connecting each of the at least two reflectors to the respective support of the at least two supports such that the respective support surrounds the reflector and/or by moulding each of the at least two supports around the respective reflector of the at least two reflectors, vibration and/or movement of the at least two reflectors, e.g. relative to the measurement insert, which may be due to fluid flowing through the utility meter, may be reduced or prevented.

The elongate portion may be configured to at least partially extend along the central portion.

The central portion may be at least partially moulded around the elongate portion. This may allow the at least reflectors to be connected to the respective support without the necessity of the at least two reflectors being moulded from above. This in turn may reduce turbulences in the measuring path and/or reduce contact points for contamination or corrosion of the elongate portion, while allowing a reflective area of each of the at least two reflectors to be increased or maximised.

By moulding the at least two supports around the respective reflector of the at least two reflectors and/or the central portion partially around the elongate portion, movement, rattling and/or slipping of the at least two reflectors, e.g. due to fluid flowing through the utility meter, may be reduced or prevented. This in turn may result in an improved stability of the measurement insert and/or improved accuracy of the utility meter. Additionally or alternatively, a loss of one or each of the at least two reflectors may be prevented.

The elongate portion may comprise at least two end portions. The elongate portion may comprise a central part. The at least two end portions may be arranged on either side of the central part of the elongate portion. Each of the at least two end portions of the elongate portions may connect to a respective reflector of the at least two reflectors. Each of the at least two end portions may be configured to arrange the respective reflector at an angle relative to the central part of the elongate portion.

Each of the at least two end portions of the elongate portion may connect to a respective connection portion of the at least two connection portions. This may allow for an increased stability of a connection between the central portion and the at least two supports and/or reduce or prevent a flexion or deformation of the at least two supports relative to the central portion may be reduced or prevented. This in turn may increase a stability of the measurement insert, which in turn may allow the utility meter to determine a rate of fluid flowing through the meter and/or a quantity of thermal energy that is supplied to the consumer with an improved accuracy.

Each of the at least two connection portions may be partially moulded around sides of a respective end portion of the at least two end portions. This may improve a positioning and/or alignment of each of the at least two reflectors and/or each of the at least two end portions relative to central portion of the central portion and/or the measurement path, while allowing a reflective area of each of the at least two reflectors to be maximised or increased. For example, by partially moulding each of the at least two connection portions around sides of a respective end portion of the at least two end portions, moulding of the at least two reflectors from above may not be necessary. Additionally or alternatively, a stability of a connection between the central portion and the at least two supports may be increased and/or a flexion or deformation of the at least two supports relative to the central portion may be reduced or prevented. This may increase a stability of the measurement insert, which in turn may allow the utility meter to determine a rate of fluid flowing through the meter and/or a quantity of thermal energy that is supplied to the consumer with an improved accuracy.

The central portion may comprise a first surface and a second surface. The first surface of the central portion may define the measuring path. The first surface may be an inner surface or interior surface of the central portion. The elongate portion may be at least partially connected to the second surface of the central portion. The second surface of the central portion may be an exterior surface or outer surface of the central portion.

By connecting the elongate portion at least partially to the second surface of the central portion, contamination and/or corrosion of the elongate portion may be prevented or reduced. Additionally or alternatively, turbulences in the measuring path of the utility meter may be reduced or prevented, which in turn may lead to an improved accuracy of the utility meter.

According to a second aspect of the present disclosure there is provided a utility meter, the utility meter comprising a tubular portion, such as a flow tube or measurement tube, and a measurement insert according to the first aspect, wherein the measurement insert is arranged in the tubular portion.

According to a third aspect of the present disclosure there is provided a method of forming a measurement insert for a utility meter. The measurement insert comprises a central portion defining a measuring path of the utility meter and at least two supports connected to and/or arranged on either side of the central portion. The measurement insert comprises at least two connection portions, each of the at least two connection portions being configured to connect a respective support of the at least two supports to the central portion.

The method comprises providing or forming a reflector arrangement. The reflector arrangement comprises at least two reflectors configured to reflect one or more signals in the measuring path and an elongate portion configured to connect the at least two reflectors to each other. The method comprises forming a part of the central portion, the at least two supports and the at least two connection portions such that the elongate portion is at least partially connected to the central portion and to each of the at least two connection portions and such that each of the at least two reflectors is connected to a respective support of the at least two supports.

The method disclosed herein may replace an installation of the first and second reflectors on a measurement insert by hand, e.g. following the formation of the measurement insert. The method disclosed herein may allow for a firm and/or stable connection between the at least two reflectors and the respective supports. This may avoid unwanted loss of the at least two reflectors. This in turn may ensure that the measurement insert may be used in the utility meter to determine the rate of fluid flowing through the meter and/or the quantity of thermal energy that is supplied to the consumer.

The method may comprise forming the at least two supports such that each support surrounds a circumference of a respective reflector.

The method may comprise positioning the reflector arrangement in a mould and using a moulding process to form the part of the central portion, the at least two supports and the at least two connection portions. By positioning the reflector arrangement in the mould, an orientation of the at least two reflectors relative to each other may be maintained.

According to a fourth aspect of the present disclosure, there is provided a computer program comprising computer executable instructions that, when executed by a processor, cause the processor to control an additive manufacturing apparatus to manufacture one or more parts of a measurement insert according to the first aspect.

According to fifth aspect of the present disclosure, there is provided a method of manufacturing a product via additive manufacturing. The method comprises obtaining an electronic file representing a geometry of the product. The method comprises controlling an additive manufacturing apparatus to manufacture, over one or more additive manufacturing steps, the product according to the geometry specified in the electronic file. The product is or comprises one or more parts of a measurement insert according to the first aspect.

According to a sixth aspect of the present disclosure there is provided a measurement insert for a utility meter, the measurement insert comprising a central portion defining a measuring path of the utility meter, at least two supports connected to and/or arranged on either side of the central portion, and a reflector arrangement. The reflector arrangement comprises at least two reflectors configured to reflect one or more signals in the measuring path, each of the at least two reflectors being connected to a respective support of the at least two supports, and an elongate portion at least partially connected to the central portion, wherein the elongate portion is configured to connect the at least two reflectors to each other. The measurement insert according to the sixth aspect may comprise any of the features of the measurement insert of the first aspect.

The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilized, either alone or in combination with any other defined feature, in any other aspect or embodiment or to form a further aspect or embodiment of the disclosure.

### BRIEF DESCRIPTION OF THE DRAWINGS

These and other aspects of the present disclosure will now be described, by way of example only, with reference to the accompanying drawings, wherein:
Figure 1 depicts a cross-sectional view of a thermal energy meter for measuring a quantity of thermal energy that is supplied to a consumer according to an embodiment of the disclosure, the meter comprising a flow tube and a measurement insert;
Figure 2 depicts a cross-sectional view of a part of a central portion of the measurement insert of the meter of Figure 1;
Figure 3 depicts a perspective view of the part of the central portion of the measurement insert of Figure 2;
Figures 4A and 4B each depict a perspective view of a reflector arrangement for use in the meter of Figure 1;
Figure 5 depicts an exploded view of the part of the central portion of the measurement insert of Figures 2 and 3 and the reflector arrangement of Figures 4A and 4B; and
Figure 6 depicts a flow chart illustrating in overview a method of forming a measurement insert for a utility meter according to an embodiment of the disclosure.

### DETAILED DESCRIPTION OF THE DRAWINGS

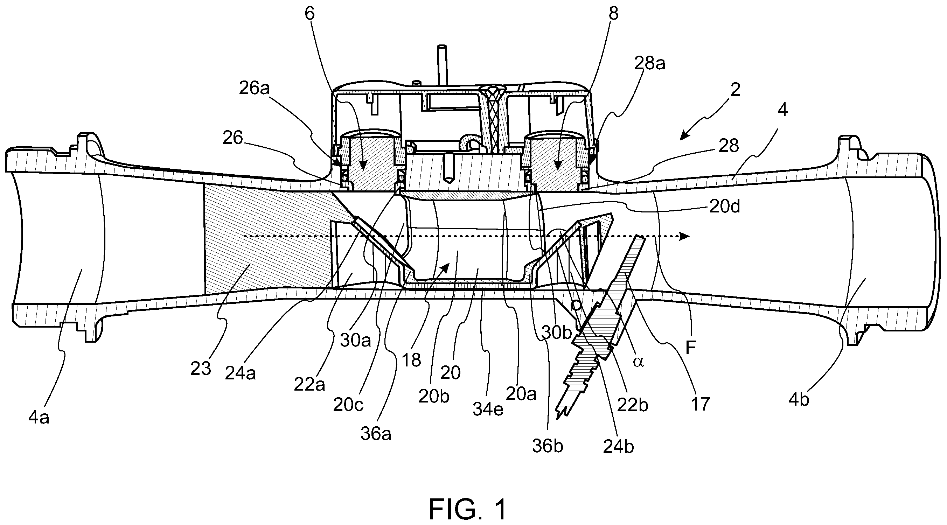

Figure 1 shows a utility meter according to an embodiment of the disclosure. In this embodiment, the meter 2 is provided in the form of a thermal energy meter, such as a heat meter or a cooling meter. For example, the meter 2 is configured to measure a quantity of heat or cold energy that is supplied to the consumer. The meter 2 is configured to measure the quantity of thermal energy based on a temperature and a rate of a fluid flowing through the meter 2. The fluid may comprise a liquid medium or a gaseous medium. The meter 2 may be used in a domestic or industrial system.

The meter 2 comprises a tubular portion. The tubular portion is provided in the form of a flow tube 4. The flow tube may also be referred to as a measurement tube. The terms "flow tube" and "measurement tube" may be interchangeably used. The flow tube 4 comprises an inlet 4a and an outlet 4b. In use, the fluid flows from the inlet 4a to the outlet 4b of the flow tube 4 in a flow direction F, which indicated by the arrow in Figure 1.

In the embodiment shown in Figure 1, the flow tube 4 is provided in the form of a separate flow tube, which is configured to be arranged in a pipe or pipeline system through which the fluid flows. It will be appreciated that in other embodiments, the flow tube may not be separate from the pipe, but instead be part of a portion of the pipe or pipeline system. The flow tube 4 may be formed from a plastic material, such as a thermoplastic polymer material. An exemplary plastic material may comprise polyphenylene sulphide, glass-fibre-reinforced polyphenylene sulphide or another plastic or polymer material. The glass-fibre content of the glass-fibre-reinforced polyphenylene sulphide may be in the region of about 30% to 40%.

However, it will be appreciated that in other embodiments, the flow tube may be formed from a metal material, such as brass or another metal material.

The meter 2 comprises an ultrasonic thermal energy meter. The meter 2 is configured to measure a flow rate of the fluid flowing through the flow tube 4 based on a transit time (or "time of flight") difference of oppositely propagating ultrasonic signals (e.g. sound waves). The meter 2 comprise a first transducer 6 and a second transducer 8. The first and second transducers 6, 8 are each provided in the form of an ultrasonic transducer. Each of the first and second ultrasonic transducers 6, 8 comprises a piezoelectric element, a dampening element, an acoustic insulator, and a metal shield (not shown). The first and second ultrasonic transducers 6, 8 are configured such that each of the first and second transducers 6, 8 can send ultrasonic signals to and receive ultrasonic signals from the other of the first and second ultrasonic transducers 6, 8. For example, the first ultrasonic transducer 6 may be configured to emit a first ultrasonic signal. The second ultrasonic transducer 8 may be configured to detect the first ultrasonic signal emitted by the first ultrasonic transducer. The second ultrasonic transducer 8 may be configured to emit a second ultrasonic signal in a direction opposite to the first signal. The first ultrasonic transducer 6 may be configured to detect the second ultrasonic signal. The first and second ultrasonic signals may each comprise a pulsed ultrasonic signal. A difference in arrival time between the first and second signals is measured and converted into a flow rate. For example, if no fluid flows through the flow tube 4 or a velocity of the fluid in the flow tube equals zero, the arrival time of the first and second signals is the same. When a fluid flows through the flow tube 4 or a velocity of the fluid in the flow tube is larger than zero, the arrival time of one of the first and second ultrasonic signals is different. This is because an ultrasonic signal travelling in the flow direction F is faster than an ultrasonic signal travelling in a direction opposite to the flow direction. The meter 2 may comprise processing circuitry configured to process the detected transit times. The processing circuitry may be configured to determine the flow rate of the fluid, e.g. based on the detected transit times.

The meter may comprise at least two temperature sensors for detecting a temperature difference of the fluid between two positions in the pipe or pipeline system, such as on either side of a consumer (not shown in Figure 1). At least one of the two temperature sensors may be arranged in proximity to the outlet 4b of the flow tube 4. The at least one of the two temperature sensors is indicated in Figure 1 by reference numeral 17. At least one other of the two temperature sensors may be arranged in the pipe or pipeline system, e.g. in the inlet or outlet of a cooling system or a heating system. The location of the at least one other of the two temperature sensor may depend on whether the meter is arranged in the inlet or outlet of the heating system or cooling system. For example, the meter 2 may be arranged in at least one of the inlet and outlet of the heating system or cooling system and the at least one other of the two temperature sensors is arranged in at least one other of the inlet and the outlet of the heating system or cooling system. The at least one other of the two temperature sensors is not shown in Figure 1.

It will be appreciated that in other embodiments, the meter may not comprise the temperature sensors. In such other embodiments, the meter may be provided in the form of a flow rate meter. In examples where the fluid is a liquid, such as water, the meter can be used as a water meter. In examples where the fluid is a gas, the meter can be used as a gas meter.

The meter 2 comprises a measurement insert 18. The measurement insert 18 is configured to be arranged in the flow tube 4. Figure 1 shows the flow tube 4 with the measurement insert 18 arranged therein. However, it will be appreciated that the measurement insert 18 is removeable from the flow tube 4, e.g. to allow replacement of the measurement insert 18.

The measurement insert 18 may be formed from a plastic material, such as a thermoplastic polymer material. An exemplary material that may be used to form the measurement insert may comprise polyphenylene sulphide, glass-fibre-reinforced polyphenylene sulphide or another plastic or polymer material. The glass-fibre content of the glass-fibre-reinforced polyphenylene sulphide may be in the region of about 30% to 40%.

The measurement insert 18 comprises a central portion 20. The central portion 20 is provided in the form of a tubular hollow space through which the fluid flows. The central portion 20 defines a measuring path of the meter 2. In the embodiment shown in Figure 1, the central portion 20 includes a first part 20a and a second part 20b. The first part 20a may also be referred to as a top part of the central portion 20 or the measurement insert 18. The second part 20b may also be referred to as a bottom portion of the central portion 20. The first and second parts 20a, 20b of the central portion 20 are configured to detachably connect to each other. The measurement insert 18 may comprise a plurality of connection elements. For example, each of the first and second parts 20a, 20b may comprise a connection element (not shown in Figure 1). The connection element of one of the first and second parts 20a, 20b may comprise a protrusion, pin or the like. The connection element of the other of the first and second parts 20a, 20b may comprise a bore, groove or the like. The bore, groove or the like may be configured to receive the protrusion, pin or the like. The connection element of at least one or each of the first and second parts 20a, 20b may comprises a combination of one or more protrusions, pins, grooves, bores and/or the like.

When the first and second parts 20a, 20b of the central portion 20 are connected to each other, the first and second parts 20a, 20b define the tubular hollow space. For example, each of first and second parts 20a, 20b of the central portion 20 are provided in the form of a half of a tubular, half-shell or the like.

The measurement insert 18 comprises two supports 22a, 22b. The supports may also be referred to support portions or structures 22a, 22b. The supports 22a, 22b are arranged on either side of the central portion 20. In the embodiment shown in Figure 1, the supports 22a, 22b are arranged on either side of the second part 20b of the central portion 20. The supports 22a, 22b are integrally formed with the second part 20b of the central portion 20. For example, the second part 20b of the central portion 20 and the supports 22a, 22b may be formed using a moulding process, such as an injection moulding process. However, it will be appreciated that in other embodiments at least one or each of the supports may be integrally formed with the first part of the central portion.

Each support 22a, 22b is configured to hold a reflector 24a, 24b, such as a mirror, e.g. a metal mirror. The reflector 24a, 24b may also be referred to as a reflective element. As such, each support 22a, 22b may also be referred to as a reflector tower or reflector dome. Each support 22a, 22b is configured to streamline a flow of the fluid in the measuring path. For example, each support 22a, 22b may comprises a pointed shape. Each support 22a, 22b is configured to arrange a respective reflector 24a, 24b at an angle α relative to a longitudinal or central axis of the meter 2. In this embodiment, the angle α is about 45°. However, it will be appreciated that in other embodiments, the angle may be less or more than about 45°. Although the angle α is only indicated for one of the supports 22a, 22b in Figure 1, it will be appreciated that the other of the supports 22a, 22b is configured in the same manner. In the embodiment shown in Figure 1, the longitudinal or central axis of the meter 2 coincides with the flow direction F. However, it will be appreciated that in other embodiments, the longitudinal or central axis of the meter 2 may be parallel, e.g. substantially parallel, to the flow direction F.

The meter 2 comprises a flow conditioner 23. In this embodiment, the flow conditioner 23 is part of the measurement insert 18. For example, the flow conditioner 23 is integral with the measurement insert 18. When the fluid conditioner is provided separately from the measurement insert, turbulences in the fluid flowing through the flow tube may be present. For example, turbulences in the fluid flowing through the flow tube may be due to edges, such as fluid flow breakaway edges, and/or recirculation zones that may be present in the meter. These turbulences may be due to a relative positioning of the measurement insert and the flow conditioner.

By providing the flow conditioner as an integral part of the measurement insert, these turbulences in the fluid flowing through the meter may be reduced.

In this embodiment, the flow conditioner 23 is integral with the second part 20b of the central portion 20. However, it will be appreciated that in other embodiments, the flow conditioner may be part of and/or integral with the first part of the central portion. The flow conditioner 23 is configured to extend from at least one of the supports 22a, 22b. For example the at least one support 22a is arranged between the flow conditioner 23 and the central portion 20 of the measurement insert 18. The flow conditioner 23 is configured to condition and/or guide the fluid flowing through the meter, e.g. before the fluid enters the central portion 20 of the measurement insert 18. This may reduce turbulences in the fluid flowing through the meter 2, thereby improving an accuracy of the meter 2.

The flow tube 4 comprises a first opening 26 and a second opening 28. Each of the first and second openings 26, 28 is configured as a through-opening or through-hole. The first opening 26 is part of a first borehole 26a of the flow tube 4. The first borehole 26a is configured to receive the first ultrasonic transducer 6. The second opening 28 is part of a second borehole 28a of the flow tube 4. The second borehole 28a is configured to receive the second ultrasonic transducer 8. As such, each of the first and second openings 26, 28 may also be referred to as a transducer opening.

The arrangement of the first and second ultrasonic transducers 6, 8, the supports 22a, 22b and the reflectors 24a, 24b defines the propagation path of the first and second ultrasonic signals. In the embodiment shown in Figure 1, the meter 2 implements a "U-shaped" propagation path of the first and second ultrasonic signals. Thus, the first and second ultrasonic signals that are exchanged between the first and second ultrasonic transducers 6, 8 of the meter 2 do not travel in a straight line from one of the first and second transducers 6, 8 to the other of the first and second ultrasonic transducers 6, 8, but are guided by the reflectors 24a, 24b along a U-shaped path within the flow tube 4. A first reflector 24a arranged in proximity of the inlet 4a may also be referred to as an upstream reflector 24a. A second reflector 24b arranged in proximity to the outlet 4b may also be referred to as a downstream reflector 24b.

The first and second ultrasonic transducers 6, 8 are arranged in the respective first and second boreholes 26a, 28a such that the first and second ultrasonic signals are emitted or detected in a direction perpendicular, e.g. substantially perpendicular, to the flow direction F, at an end portion of the first and second ultrasonic transducers 6, 8. For example, in use, the first ultrasonic transducer 6 emits the first ultrasonic signal towards the first reflector 24a in a direction perpendicular, e.g. substantially perpendicular, to the flow direction F. The first reflector 24a reflects the first signal such that the first signal propagates in a direction parallel to the flow direction F. The second reflector 24b reflects the first signal towards the second ultrasonic transducer 8, thereby completing the U-shaped propagation path, Similarly, the second ultrasonic signal emitted by the second ultrasonic transducers propagates along the same path to the first reflector 24a, before being detected by the first ultrasonic transducer 6. The first and second ultrasonic signals propagate parallel to flow direction in the measuring path. The measuring path may also be understood as the propagation path between the first and second reflectors 24a, 24b.

The first and second ultrasonic transducers, the supports and the reflectors described herein are not limited to being arranged such that they define the U-shaped propagation path of the first and second ultrasonic signals. It will be appreciated that in other embodiments, one or more of the first and second ultrasonic transducers, the supports and the reflectors may be arranged to define a "W-shaped" propagation path, a "Z-shaped" propagation path, helical propagation path or another propagation path of the first and second ultrasonic signals. In such other embodiments, the meter may comprise one or more further supports and/or one or more further reflectors.

The meter 2 comprises a connector arrangement for connecting the measurement insert 18 to the flow tube 4. The connector arrangement comprises a first connector 30a and a second connector 30b, which are shown in Figure 1. Each of the first and second connectors 30a, 30b may also be referred to as a fastening ring. Each of the first and second connectors 30a, 30b may be configured to connect to a respective one of the first and second openings 26, 28 of the flow tube 4.

The first connector 30a is configured to connect a first portion of the measurement insert 18 to the flow tube 4. The first portion of the measurement insert 18 comprises a first end portion 20c of the first part 20a of the central portion 20. The second connector 30b is configured to connect a second portion of the measurement insert 8 to the flow tube 4. The second portion of the measurement insert 18 comprises a second end portion 20d of the first part 20a of the central portion 20. It will be appreciated that in other embodiments at least one of the first and second connectors may be configured to connect at least one of first and second end portions of the second part of the central portion to the flow tube.

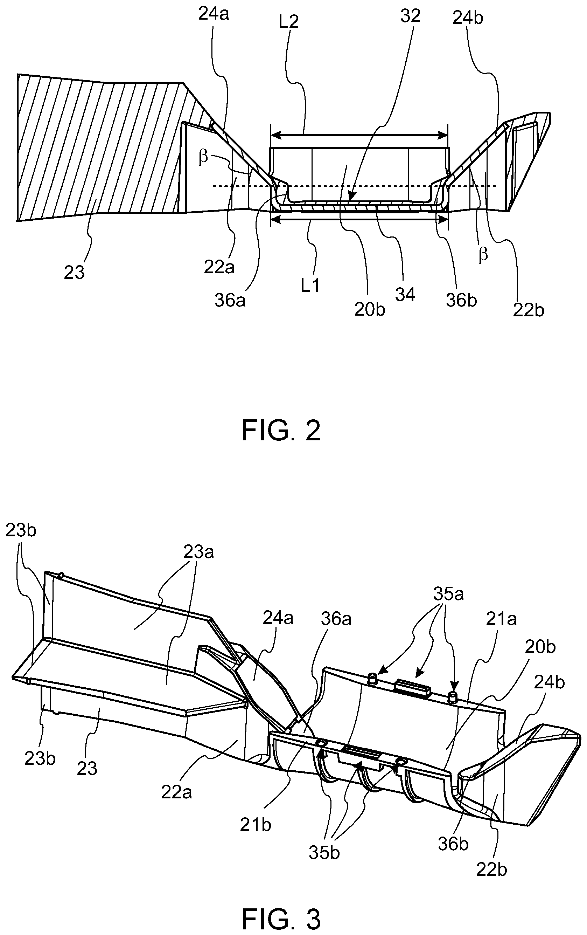

Figure 2 shows a cross-sectional view of the second part 20b of the central portion 20 of the measurement insert 18 shown in Figure 1. The second part 20b includes the first and second reflectors 24a, 24b. The first and second reflectors 24a, 24b are part of a reflector arrangement 32. The reflector arrangement 32 may also be referred to as combined reflector plates. The reflector arrangement 32 is part of the measurement insert 18.

The reflector arrangement 32 comprises an elongate portion 34. The elongate portion may be provided in the form of a bar, rod or another elongate member. The elongate portion 34 is configured to connect the first and second reflectors 24a, 24b to each other. This may facilitate an installation of the first and second reflectors 24a, 24b in the measurement insert 18. For example, the elongate portion 34 may determine a position of the first and second reflectors 24a, 24b relative to each other. This may allow for a reduction of a tolerance for installing the first and second reflectors 24a, 24b with respect to each other in the measurement insert 18, which in turn may improve an accuracy of the fluid flow rate determined by the meter 2. Additionally or alternatively, by connecting the first and second reflectors 24a, 24b to each other using the elongate portion 34, the first and second reflectors 24a, 24b may be correctly orientated relative to each other and/or relative to the first and second ultrasonic transducers 6a, 8.

The first and second reflectors 24a, 24b are arranged at opposite ends of the elongate portion 34. The elongate portion 34 is configured to connect the first and second reflectors 24a, 24b to each other such that first and second reflectors 24a, 24b face each other. The elongate portion 34 and the first and second reflectors 24a, 24b are integrally formed with each other. This may facilitate manufacture of the reflector arrangement 32. However, it will be appreciated that in other embodiments, the reflectors and the elongate portion may be separate parts, which may be connected together.

The reflector arrangement 32 may comprise a metal material or a metal alloy. For example, the reflector arrangement may comprise stainless steel. However, it will be appreciated that in other embodiments, the reflector arrangement may comprise other metal materials or other metal alloy materials that are suitable for use in the fluid and/or have a high degree of reflection. It will be appreciated that the degree of reflection may depend on a material of the first and second reflectors 24a, 24b, an angle of the first and second reflectors 24a, 24b relative to the longitudinal axis of the meter 2 and/or an acoustic impedance of the fluid flowing through the meter 2.

Figure 3 shows a perspective view of the second part 20b of the central portion 20, including the first and second reflectors 24a, 24b, shown in Figure 2. Each of the first and second reflectors 24a, 24b is connected to a respective support such that the respective support surrounds the reflector 24a, 24b. For example, each of the first and second reflectors 24a, 24b is connected to a respective support 22a, 22b such that the respective support surrounds a circumference of the reflector 24a, 24b. Each of the first and second reflectors 24a, 24b may be embedded in a respective support 22a, 22b. Each support 22a, 22b is moulded around a respective reflector 24a, 24b. Each support 22a, 22b is moulded around a respective reflector 24a, 24b so as not to extend past the circumference of a respective reflector 24a, 24b and/or on a reflective surface of a respective reflector 24a, 24b. For example, each support 22a, 22b may be flush with a respective reflector 24a, 24b. This may avoid a reflective surface of each reflector 24a, 24b being decreased by the respective support 22a, 22b and/or avoid the formation of contact point for corrosion and/or contamination of the reflectors 24a, 24b. The arrangement of each support 22a, 22b and each respective reflector 24a, 24b may allow for a firm and/or stable connection between each reflector 24a, 24b and the respective support 22a, 22b. This may avoid unwanted loss of the first and second reflectors 24a, 24b. This in turn may ensure that the measurement insert may be used in the meter 2 to determine the flow rate of the fluid. Additionally or alternatively, by connecting each reflector to the respective support such that a respective support surrounds the reflector, vibration and/or movement of the first and second reflectors 24a, 24b e.g. relative to the second part 20b of the central portion 20, which may be due to fluid flowing through the meter 2, may be reduced or prevented. Additionally or alternatively, by connecting each reflector to a respective support such that a respective support surrounds the reflector, a corroding surface, e.g. a surface of the measurement insert that may be subject to corrosion and/or contamination, may be reduced.

Figure 3 also shows the plurality of connection elements of the measurement insert 18, mentioned above. Some of the connections elements are part of the second part 20b. The connection elements comprise a plurality of protrusions 35a configured to be received in a plurality of corresponding bores arranged on the first part 20a. In this embodiment, the connection element comprises three protrusions 35a. At least one of the protrusions has a different shape and/or size compared to the other two protrusions. For example, the at least one protrusion has a rectangular shape and the other two protrusions have a cylindrical shape. The rectangular-shaped protrusion is arranged between the cylindrical-shaped protrusions. A size of the rectangular-shaped protrusion is larger than a size of each of the cylindrical-shaped protrusions. However, it will be appreciated that in other embodiments, the connection element may comprise more or less than three protrusions and/or a shape, arrangement and/or size of one or more of the protrusions may be different from that described herein.

The connection elements comprise a plurality of bores 35b configured to receive a plurality of corresponding protrusions arranged on the first part 20a. In this embodiment, the connection element comprises three bores 35b. At least one of the bores has a different shape and/or size compared to the other two bores. For example, the at least one bore has a rectangular shape and the other two bores have a cylindrical shape. The rectangular-shaped bore is arranged between the cylindrical-shaped bore. A size of the rectangular-shaped bore is larger than a size of each of the cylindrical-shaped bore. However, it will be appreciated that in other embodiments, the connection element may comprise more or less than three bores and/or a shape, arrangement and/or size of one or more of the bore may be different from that described herein.

The second part 20b comprises two contact portions 21a, 21b. The contact portions 21a, 21b are configured to contact two corresponding contact portions of the first part 20a, e.g. when the first and second parts 20a, 20b are connected together to form the central portion 20. The contact portions 21a, 21b of the second part 20b extend in a direction parallel, e.g. substantially parallel, to the longitudinal axis of the meter 2. A distance between the contact portions 21a, 21b may correspond, e.g. substantially correspond, to a diameter of the central portion 20. In the embodiment shown in Figure 3, the protrusions 35a are arranged on a first contact portion 21a and the bores 35b are arranged on a second contact portion 35b. The protrusions 35a and the bores are arranged along a length of the respective first and second contact portions 21a, 21b. For example, the protrusions 35a and the bores are arranged in the direction parallel, e.g. substantially parallel, to the longitudinal axis of the meter 2. However, it will be appreciated that in other embodiments, the bores and protrusions may be differently arranged.

Referring to Figure 3, the flow conditioner 23 comprises one or more guide plates 23a. In this embodiment, the flow conditioner 23 comprises two guide plates 23a. However, it will be appreciated that in other embodiments, the flow conditioner may comprise more or less than two guide plates. The guide plates 23a are arranged to form a cross arrangement. However, the flow conditioner described herein is not limited to a cross arrangement of the guide plates. It will be appreciated that in other embodiments, the guide plates may be differently arranged. An edge portion 23b of each guide plate 23 is tapered towards a free end of each guide plate 23a. The edge portion 23b may also be referred to as a leading edge. By tapering the edge portion 23b of each guide plate, a surface of each edge portion 23b of each guide plate 23a may be reduced. This is turn may reduce turbulences in the fluid flowing through the meter. Alternatively or additionally, the flow conditioner 23 may comprise a perforated guide plate (not shown).

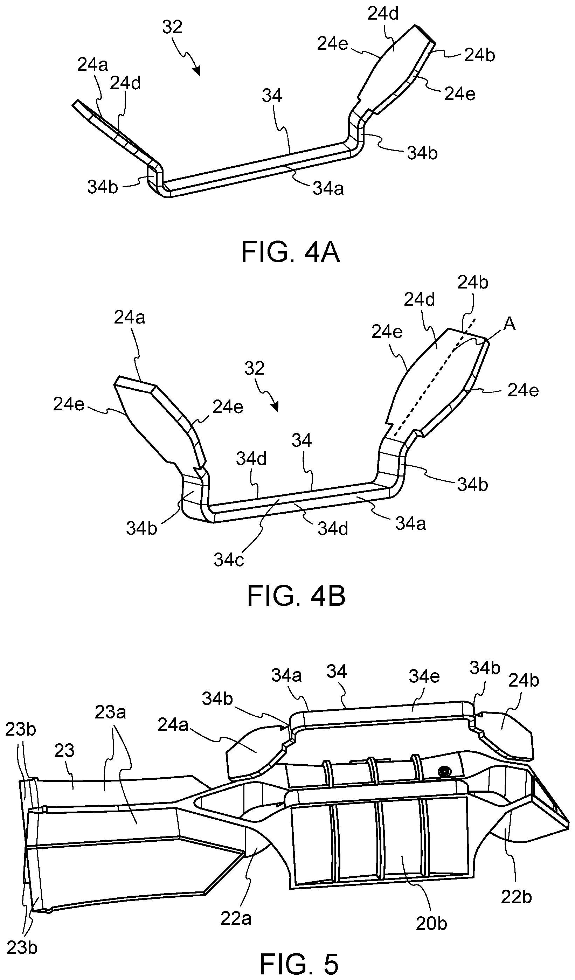

Figures 4A and 4B each show a perspective view of a reflector arrangement for use in the meter 2 shown in Figure 1. The reflector arrangement shown in Figures 4A and 4B may comprise any of the feature of the reflector arrangement 32 described above. The elongate portion 34 comprises a central part 34a. The elongate portion 34 comprises two end portions 34b. The end portions 34b are arranged on either side of the central part 34a. For example, the end portions 34b are arranged on opposing sides of the central part 34a. Each end portion 34b connects to a respective reflector 24a, 24b. For example, each end portion 34b is configured to connect the respective reflector 24a, 24b to the central part 34a.

The measurement insert 18 comprises two connection portions 36a, 36b. Each connection portion 36a, 36b may be configured to connect a respective support 22a, 22b to the second part 20b of the central portion 20. The connection portions 36a, 36b are integrally formed with the supports 22a, 22b and the second part 20b.

Each end portion 34b is configured to support and/or complement a respective connection portion 36a, 36b of the measurement insert 18. Each connection portion 36a, 36b is arranged between each support 22a, 22b and the second part 20b of the central portion 20. The connection portions 36a, 36b can be best seen in Figures 1 to 3. Each end portion 34b of the elongate portion 34 is arranged to extend from the central part 34a in a direction perpendicular, e.g. substantially perpendicular, to the central part 34a. Each end portion 34b is bend such that each end portion 34b connects to the respective reflector 24a, 24b, which is arranged at the angle β relative to the central part 34a.

The elongate portion 34 is at least partially connected to each connection portion 36a, 36b. For example, each end portion 34b is connected to a respective connection portion 36a, 36b. For example, each connection portion 36a, 36b may be partially moulded around the sides of a respective end portion 34b. This may allow for an increased stability of a connection between the second part 20b and the supports 22a, 22b and/or reduce or prevent a flexion or deformation of the supports 22a, 22b relative to the second part 20b of the central portion 20. This in turn may increase a stability of the measurement insert 18.

Referring to Figures 4A and 4B, each of the first and second reflectors 24a, 24b comprises a reflective surface 24d. The reflective surface 24d may also be referred to as a reflective area. The first and second reflectors 24a, 24b are arranged such that the reflective surface 24d of one of the first and second reflectors 24a, 24b faces the reflective surface 24d of the other one of the first and second reflectors 24a, 24b. The first and second reflectors 24a, 24b, e.g. the reflective surfaces 24d, have the same size and shape. For example, each of the first and second reflectors 24a, 24b is symmetric about a central or longitudinal axis A, which is indicated in Figure 4B. Each reflector 24a, 24b may comprise a partial curved shape. For example, opposing sides 24e of each of the first and second reflectors 24a, 24b may comprise a curved shape. The opposing sides 24e of each of the first and second reflectors 24a, 24b may be outwardly curved. This may allow for an increase of an area of each reflective surface 24d proximal to a centre of each reflective surface 24d, e.g. relative to an area of the reflective surface 24d proximal to a free end of each reflector 24a, 24b and/or proximal to each end portion 34b of the elongate portion 34a. The free end of each reflector may comprise a straight side, which may be arranged perpendicularly, e.g. substantially perpendicularly to the central or longitudinal axis A of each of the first and second reflectors 24a, 24b. A size of each of the first and second reflectors 24a, 24b, e.g. each reflective surface 24d, may dependent on the signals transmitted by the first and second ultrasonic transducers and/or a size or dimension of the supports 22a, 22b. The connection of the first and second reflectors 24a, 24b to the elongate portion 34 and/or the connection of the elongate portion 34 to the central portion 20, e.g. the second part thereof, and to the connection portions 36a, 36b, as described above, may avoid the necessity of moulding the reflectors from above. This in turn may allow for an increased size of the reflective surface 24d of each of the first and second reflectors 24a, 24b. The increased size of the reflective surface 24d of each of the first and second reflectors 24a, 24b may be about 50% to 65% relative to a size of a reflective surface of reflectors used in known meters. It will be appreciated that in other embodiments, the reflectors, e.g. the reflective surfaces, may have different sizes and/or shapes.

Figure 5 shows an exploded view of the second part 20b shown in Figures 2 and 3 and the reflector arrangement 32 shown in Figures 4A and 4B. From Figures 1, 2 and 5, the elongate portion 34 is configured to at least partially extend along a length of the second part 20b of the central portion 20. For example, the central part 34a of the elongate portion 34 has a length L1 that corresponds, e.g. substantially corresponds, to a length L2 of the second part 20b of the central portion 20, as shown in Figure 2.

In the embodiment shown in Figures 1, 2 and 5, the elongate portion 34 is configured to at least partially extend in a direction parallel, e.g. substantially parallel, to a central or longitudinal axis of the measurement insert 18. For example, the central part 34a of the elongate portion 34 is configured to extend in the direction parallel to the central or longitudinal axis of the measurement insert 18. It will be appreciated that the central or longitudinal axis of the measurement insert 18 may correspond to the central or longitudinal axis of the meter 2, which in turn coincides with the flow direction F. However, it will be appreciated that in other embodiments, the elongate portion, e.g. the central part thereof, may be configured to extend in one or more other directions.

Each of the first and second reflectors 24a, 24b is arranged at the angle β relative to the central part 34a. For example, each end portion 34b is configured to arrange the respective reflector 24a, 24b at the angle β relative to the central part 34a of the elongate portion 34. In this embodiment, the angle β is the same as the angle α mentioned above. The angle β of each of the first and second reflectors 24a, 24b relative to the central part 34a is shown in Figure 2.

Referring to Figures 1, 2 and 5, the second part 20b of the central portion 20 comprises a first surface and a second surface. The first surface of the second part 20b of the central portion 20 defines the measuring path of the utility meter 2. The first surface may be an inner surface or interior surface of the second part 20b of the central portion 20. The elongate portion 34 is at least partially connected to the second surface of the second part 20b of the central portion 20. The second surface of the second part 20b of the central portion 20 may be an exterior surface or outer surface of the central portion. For example, the elongate portion 34 is arranged on an outside of the second part 20b of the central portion 20. By connecting the elongate portion 34 at least partially to the second surface of the second part 20b of the central portion 20, contamination and/or corrosion of the elongate portion 34 may be prevented or reduced. Additionally or alternatively, turbulences in the measuring path of the utility meter 2 may be reduced or prevented, which in turn may lead to an improved accuracy of the utility meter 2.

Referring to Figures 1, 2 and 5, the second part 20b of the central portion 20, e.g. the second surface thereof, is at least partially moulded around the elongate portion 34. For example, a first surface 34c and the sides 34d of the central part 34a may be in contact with the second part 20b of the central portion 20, e.g. the second surface thereof. A second surface 34e of the central part 34, which is opposite to the first surface 34c, may be in contact with the flow tube 4, e.g. when the measurement insert 18 is arranged in the flow tube 4. For example, when the measurement insert 18 is arranged in the flow tube 4, the second surface 34e of the central part 34a may be positioned between the second part 20b of the central portion 20 and the flow tube 4, as shown in Figure 1.

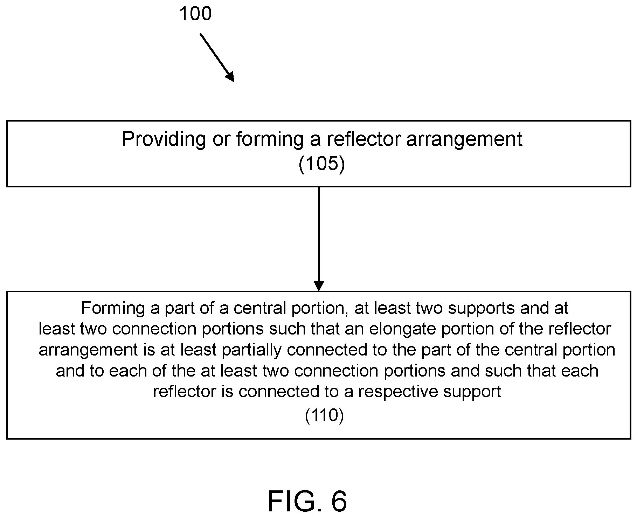

Figure 6 is a flow chart illustrating in overview a method 100 of forming a measurement insert for a utility meter according to an embodiment. The measurement insert that may be formed using the method 100 may comprise any of the features of the measurement insert 18 described above. The measurement insert that may be formed using the method may be configured to be arranged in a flow tube, such as the flow tube 4 described above, of a utility meter, such as the meter 2 described above.

In step 105, the method 100 comprises providing or forming a reflector arrangement, such as the reflector arrangement 32 described above. For example, the reflector arrangement 32 may be formed cutting or stamping the reflector arrangement 32 from a sheet of metal material or a sheet of metal alloy. The reflector arrangement 32 may be formed by bending the first and second reflectors 24a, 24b and the elongate portion 34 into the desired form. The method 100 may comprise positioning the reflector arrangement 32 in a mould. The mould may define a shape of at least the second part 20b of the central portion 20 and the supports 22a, 22b.

In step 110, the method 100 comprises forming a part of the central portion 20, and the supports 22a, 22b. In this embodiment, the method comprises forming the second part 20b of the central portion 20 and the supports 22a, 22b. The second part 20b and the supports 22a, 22b may be formed by injecting a molten plastic material into the mould. The method may comprise hardening the plastic material in the mould to form the second part 20b and the supports 22a, 22b. It will be appreciated that other parts of the measurement insert 18, such as the connection portions 36a, 36b and the flow conditioner 23, which have been described above, are formed at the same time as the second part 20b and the supports 22a, 22b. The second part 20b, the supports 22a, 22b and the connection portions 36a, 36b are formed such that the elongate portion 34 is at least partially connected to the second part 20b and to each connection portion 36a, 36b. The second part 20b, the supports 22a, 22b and the connection portions 36a, 36b are formed such that each of the first and second reflectors 24a, 24b is connected to a respective support 22a, 22b.

The method 100 may replace an installation of the first and second reflectors on a measurement insert by hand, following the formation of the measurement insert. Additionally or alternatively, by positioning the reflector arrangement 32 in the mould, an orientation of the reflectors 22a, 22b relative to each other may be maintained. The method 100 described herein may allow for a firm and/or stable connection between each of the first and second reflectors 24a, 24b and the respective supports 22a, 22b. This may avoid unwanted loss of the first and second reflectors 24a, 24b. This in turn may ensure that the measurement insert may be used in the meter 2 to determine the flow rate of the fluid.

It will be appreciated that in some embodiments, the method 100 may comprise using an additive manufacturing process. For example, the additive manufacturing process may be used to form the reflector arrangement 32, the second part 20b, supports 22a, 22b and/or other parts of the measurement insert 18, such as the connection portions 36a, 36b and the flow conditioner 23.

A common example of additive manufacturing is 3D printing. However, other methods of additive manufacturing are available. Rapid prototyping or rapid manufacturing are also terms, which may be used to describe additive manufacturing processes.

As used herein, "additive manufacturing" refers generally to manufacturing processes wherein successive layers of material(s) are provided on each other to "buildup" layer-by-layer or "additively fabricate", a three-dimensional component. This is compared to some subtractive manufacturing methods (such as milling or drilling), wherein material is successively removed to fabricate the part. The successive layers generally fuse together to form a monolithic component which may have a variety of integral sub-components.

Suitable additive manufacturing techniques in accordance with the present disclosure include, for example, Fused Deposition Modeling (FDM), 3D printing such as by inkjets and laserjets, Sterolithography (SLA), Digital Light Processing (DLP), Continuous Digital Light Processing (CDLP), Material Jetting (MJ), NanoParticle Jetting (NPJ), Drop On Demand (DOD), Binder Jetting (BJ), Multi Jet Fusion (MJF), Laminated Object Manufacturing (LOM) and other known processes.

The additive manufacturing processes described herein may be used for forming components using any suitable material. For example, the material may be plastic, polymer, metal, metal alloy, or any other suitable material that may be in solid, liquid, powder, sheet material or any other suitable form or combinations thereof. These materials are examples of materials suitable for use in additive manufacturing processes, which may be suitable for the fabrication of examples described herein.

The additive manufacturing process disclosed herein allows a single component or part of the measurement insert 18 to be formed from multiple materials. Thus, the examples described herein may be formed from any suitable mixtures of the above materials. For example, a component or part may include multiple layers, segments, or parts that are formed using different materials, processes, and/or on different additive manufacturing machines. In this manner, components or parts may be constructed, which have different materials and material properties for meeting the demands of any particular application. In addition, although the components or parts described herein are constructed entirely by additive manufacturing processes, it should be appreciated that in alternate embodiments, all or a portion of these components or parts may be formed via casting, machining, moulding, e.g. injection moulding, and/or any other suitable manufacturing process. Indeed, any suitable combination of materials and manufacturing methods may be used to form these components or parts.

Additive manufacturing processes typically fabricate components or parts based on three-dimensional (3D) information, for example a three-dimensional computer model (or design file), of the component.

Accordingly, examples described herein not only include a product or components as described herein, but also methods of manufacturing such a product or components via additive manufacturing and computer software, firmware or hardware for controlling the manufacture of such a product via additive manufacturing. It will be appreciated that the product or component may comprise the measurement insert 18 or one or more parts thereof.

The structure of one or more parts of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product.

Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files can be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce the product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining an electronic file or design file representing a geometry of the product and controlling an additive manufacturing apparatus to manufacture the product, over one or more additive manufacturing steps, the product according to the geometry specified in the electronic file or design file. The additive manufacturing apparatus may include a processor that is configured to automatically convert the electronic file or design file into computer executable instructions for controlling the manufacture of the product. In these embodiments, the electronic file or design file itself can automatically cause the production of the product once input into the additive manufacturing device. Accordingly, in this embodiment, the electronic file or design file itself may be considered computer executable instructions that cause the additive manufacturing apparatus to manufacture the product. Alternatively, the electronic file or design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

It will be understood that references to a plurality of features may be interchangeably used with references to singular forms of those features, such as for example "at least one" and/or "each". Singular forms of a feature, such as for example "at least one" or "each," may be used interchangeably.

Although the disclosure has been described in terms of particular embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

## Claims

1. A measurement insert for a utility meter, the measurement insert comprising:
a central portion defining a measuring path of the utility meter;
at least two supports connected to either side of the central portion;
at least two connection portions, each of the at least two connection portions being configured to connect a respective support of the at least two supports to the central portion; and
a reflector arrangement comprising:
at least two reflectors configured to reflect one or more signals in the measuring path, each of the at least two reflectors being connected to a respective support of the at least two supports; and
an elongate portion at least partially connected to the central portion and to each of the at least two connection portions, wherein the elongate portion is configured to connect the at least two reflectors to each other.

2. The measurement insert of claim 1, wherein the elongate portion and the at least two reflectors are integrally formed with each other.

3. The measurement insert of claim 1 or 2, wherein each of the at least two reflectors is connected to the respective support of the at least two supports such that the respective support surrounds the reflector.

4. The measurement insert of any preceding claim, wherein each of the at least two supports is moulded around the respective reflector of the at least two reflectors.

5. The measurement insert of any preceding claim, wherein the elongate portion is configured to at least partially extend along the central portion.

6. The measurement insert of any preceding claim, wherein the central portion is at least partially moulded around the elongate portion.

7. The measurement insert of any preceding claim, wherein the elongate portion comprises at least two end portions and a central part, the at least two end portions being arranged on either side of the central part of the elongate portion and/or wherein each of the at least two end portions of the elongate portions connects to a respective reflector of the at least two reflectors.

8. The measurement insert of claim 7, wherein each of the at least two end portions is configured to arrange the respective reflector at an angle relative to the central part of the elongate portion.

9. The measurement insert of claim 7 or 8, wherein each of the at least two end portions of the elongate portion connects to a respective connection portion of the at least two connection portions.

10. The measurement insert of claim 7, 8 or 9, wherein each of the at least two connection portions is partially moulded around sides of a respective end portion of the at least two end portions.

11. The measurement insert of any preceding claim, wherein an interior surface of the central portion defines the measuring path and the elongate portion is at least partially connected to an exterior surface of the central portion.

12. A utility meter, the utility meter comprising:
a flow tube; and
a measurement insert according to any preceding claim, wherein the measurement insert is arranged in the flow tube.

13. A method of forming a measurement insert for a utility meter, the measurement insert comprising:
a central portion defining a measuring path of the utility meter;
at least two supports connected to either side of the central portion;
at least two connection portions, each of the at least two connection portions being configured to connect a respective support of the at least two supports to the central portion, the method comprising:
providing or forming a reflector arrangement comprising:
at least two reflectors configured to reflect one or more signals in the measuring path;
an elongate portion configured to connect the at least two reflectors to each other; and
forming a part of the central portion, the at least two supports and the at least two connection portions such that the elongate portion is at least partially connected to the central portion and to each of the at least two connection portions and such that each of the at least two reflectors is connected to a respective support of the at least two supports.

14. The method of claim 13 comprising forming the at least two supports such that each support surrounds a circumference of a respective reflector.

15. The method of claim 13 or 14, comprising positioning the reflector arrangement in a mould and using a moulding process to form the part of the central portion, the at least two supports and the at least two connections portions.
